(19) Europäisches Patentamt / European Patent Office / Office européen des brevets

(11) **EP 4 592 829 A1**

(12) **EUROPEAN PATENT APPLICATION**
published in accordance with Art. 153(4) EPC

(43) Date of publication:
**30.07.2025 Bulletin 2025/31**

(21) Application number: **23902201.5**

(22) Date of filing: **11.09.2023**

(51) International Patent Classification (IPC):
*G06F 9/38* (2018.01)

(52) Cooperative Patent Classification (CPC):
**G06F 9/38**

(86) International application number:
**PCT/CN2023/117970**

(87) International publication number:
**WO 2024/124995 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022 CN 202211588891**

(71) Applicant: **Sanechips Technology Co., Ltd.**
**Shenzhen, Guangdong 518055 (CN)**

(72) Inventor: **DOU, Wenchao**
**Shenzhen, Guangdong 518055 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **INSTRUCTION SCHEDULING PROCESSING METHOD AND APPARATUS, AND STORAGE MEDIUM AND ELECTRONIC APPARATUS**

(57) The present application provides an instruction scheduling processing method and apparatus, a storage medium and an electronic device. The instruction scheduling processing method includes: constructing a directed acyclic graph according to data dependency relationships for instructions to be scheduled of the basic block to be currently scheduled, the directed acyclic graph includes multiple nodes; obtaining multiple instructions currently scheduled from top to bottom and from bottom to top; determining target heuristic values of the multiple instructions according to the scheduled instructions and unscheduled instructions in the directed acyclic graph respectively; and scheduling the multiple instructions according to the target heuristic values.

constructing the instructions to be scheduled of the basic block to be scheduled into a directed acyclic graph according to the data dependency relationship — S202

↓

obtaining multiple instructions currently scheduled from top to bottom and from bottom to top — S204

↓

determining the target heuristic values of multiple instructions according to the scheduled instructions and the unscheduled instructions in the directed acyclic graph — S206

↓

scheduling the multiple instructions according to the target heuristic values — S208

FIG. 2

**Description**

**CROSS-REFERENCE TO RELATED APPLICATIONS**

This application claims priority to Chinese Patent Application No. 202211588891.8, filed with the China National Intellectual Property Administration on December 12, 2022, the entire contents of which are incorporated herein by reference.

**TECHNICAL FIELD**

The present application relates to the field of communications, and in particular to an instruction scheduling processing method and apparatus, a storage medium, and an electronic device.

**BACKGROUND**

At present, a low-level virtual machine (LLVM) compiler adopts bidirectional scheduling for instruction scheduling before register allocation, and uses a combined heuristic scheduling algorithm to schedule the code by comprehensively considering register pressure, boundary weight parameters, resource determination based on deterministic finite automaton (DFA), and dependent instructions.

**SUMMARY**

The present application provides an instruction scheduling processing method and apparatus, a storage medium and an electronic device, aiming to at least solve the problem in the related art where bidirectional scheduling is used for instruction scheduling before register allocation, and the heuristic relationship between scheduled instructions and unscheduled instructions with dependencies is unclear, resulting in poor scheduling effect.

According to an aspect of the present application, an instruction scheduling processing method is provided, including: constructing a directed acyclic graph according to data dependency relationships for instructions to be scheduled of a basic block to be currently scheduled, where the directed acyclic graph includes multiple nodes, each of the multiple nodes corresponds to an instruction to be scheduled, and a connection between the multiple nodes is a clock cycle that the node needs to wait for; obtaining multiple instructions currently scheduled from top to bottom and from bottom to top; determining target heuristic values of the multiple instructions according to scheduled instructions and unscheduled instructions in the directed acyclic graph respectively; and scheduling the multiple instructions according to the target heuristic values.

According to another aspect of the present application, an instruction scheduling processing apparatus is provided, including: a construction module configured to construct a directed acyclic graph according to data dependencies of instructions to be scheduled of a basic block to be currently scheduled, where the directed acyclic graph is composed of multiple nodes, each of the multiple nodes corresponds to an instruction to be scheduled, and a connection between the multiple nodes is a clock cycle that the node needs to wait for; an obtaining module configured to acquire multiple instructions currently scheduled from top to bottom and from bottom to top; a determination module configured to determine target heuristic values of the multiple instructions according to scheduled instructions and unscheduled instructions in the directed acyclic graph respectively; and a scheduling module configured to schedule the multiple instructions according to the target heuristic values.

According to another aspect of the present application, a non-transitory computer-readable storage medium is further provided, a computer program is stored in the non-transitory computer-readable storage medium, and when the computer program is executed, the instruction scheduling processing method as described above is implemented.

According to another aspect of the present application, an electronic device is further provided, including a memory and a processor, a computer program is stored in the memory, and the processor is configured to execute the computer program to perform the instruction scheduling processing method as described above.

**BRIEF DESCRIPTION OF THE DRAWINGS**

FIG. 1 is a hardware structure block diagram of a mobile terminal of an instruction scheduling processing method according to an embodiment of the present application.
FIG. 2 is a flow chart of the instruction scheduling processing method according to an embodiment of the present application.

FIG. 3 is a flow chart of the instruction scheduling processing method according to an embodiment of the present application.

FIG. 4 is a schematic diagram of a directed acyclic graph according to an embodiment of the present application.

FIG. 5 is a schematic diagram of a height and a depth of the directed acyclic graph according to an embodiment of the present application.

FIG. 6 is a flow chart of instruction handling layer (IHL) scheduling according to an embodiment of the present application.

FIG. 7 is schematic diagram of the directed acyclic graph according to an embodiment of the present application.

FIG. 8 is a block diagram of an instruction scheduling processing device according to an embodiment of the present application.

## DETAILED DESCRIPTION OF THE EMBODIMENTS

The embodiments of the present application will be described in detail below with reference to accompanying drawings and in conjunction with embodiments.

It should be noted that the terms "first", "second", etc. in the specification, claims and the above-mentioned drawings of the present application are used to distinguish similar objects, and are not necessarily used to describe a specific order or sequence.

The current LLVM compiler does not take into account the impact of the heuristic amount of the scheduled instructions in the basic block on the unscheduled instructions, and the scheduling effect is not good.

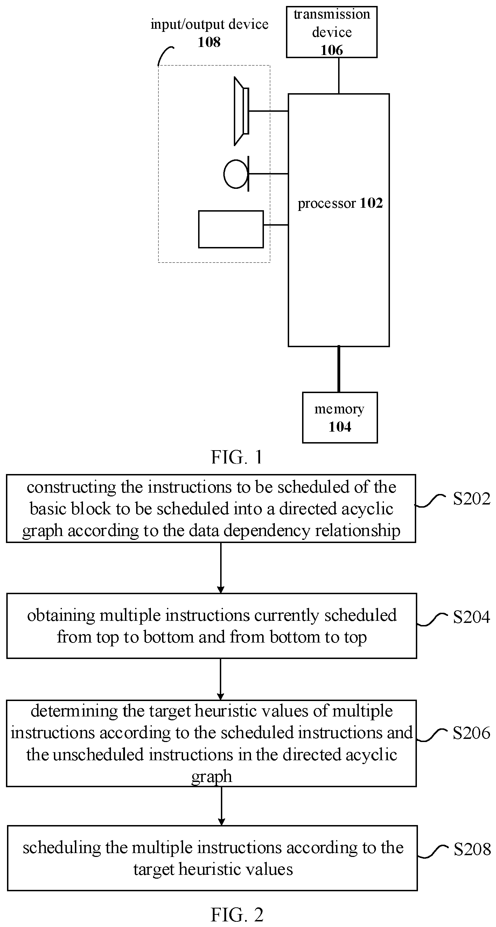

In the related art, bidirectional scheduling is used for instruction scheduling before register allocation, and the heuristic relationship between scheduled instructions and unscheduled instructions with dependencies is unclear, resulting in poor scheduling effect. No solution has been proposed. The instruction scheduling processing method provided in the present application can be executed in a mobile terminal, a computer terminal or a similar computing device. Taking running on the mobile terminal as an example, FIG. 1 is a hardware structure block diagram of the mobile terminal of the instruction scheduling processing method according to an embodiment of the present application. As shown in FIG. 1, the mobile terminal can include one or more (only one is shown in FIG. 1) processors 102 (the processor 102 can include, but is not limited to, a processing device such as a microprocessor MCU or a programmable logic device) and a memory 104 for storing data. The mobile terminal can also include a transmission device 106 and an input/output device 108 for communication functions. Those skilled in the art can understand that the structure shown in FIG. 1 is only for illustration and does not limit the structure of the mobile terminal. For example, the mobile terminal can also include more or fewer components than those shown in FIG. 1, or have a configuration different from that shown in FIG. 1.

The memory 104 can be used to store computer programs, for example, software programs and modules of application software, such as the computer program corresponding to the instruction scheduling processing method in the present application. The processor 102 executes various functional applications and instruction scheduling processing by running the computer program stored in the memory 104, that is, implements the above-mentioned instruction scheduling processing method. The memory 104 can include a high-speed random access memory, and can also include a non-volatile memory, such as one or more magnetic storage devices, flash memory, or other non-volatile solid-state memory. In some examples, the memory 104 can further include memories remotely located relative to the processor 102, and these remote memories may be connected to the mobile terminal via a network. Examples of the above network include, but are not limited to, the Internet, an intranet, a local area network, a mobile communication network, and combinations thereof.

The transmission device 106 is used to receive or send data via a network. The specific example of the above network may include a wireless network provided by a communication provider of the mobile terminal. In one example, the transmission device 106 includes a network adapter (network interface controller, referred to as NIC), which can be connected to other network devices through a base station to communicate with the Internet. In one example, the transmission device 106 can be a radio frequency (RF) module, which is used to communicate with the Internet wirelessly.

In this embodiment, an instruction scheduling processing method running on the above mobile terminal or network architecture is provided. FIG. 2 is a flowchart of the instruction scheduling processing method according to an embodiment of the present application. As shown in FIG. 2, the process includes steps S202 to S208.

Step S202, constructing the instructions to be scheduled of the basic block to be scheduled into a directed acyclic graph according to the data dependency relationship. The directed acyclic graph is composed of multiple nodes, each node corresponds to the instruction to be scheduled, and the connection between the nodes is the clock cycle that the node needs to wait.

Step S204, obtaining multiple instructions currently scheduled from top to bottom and from bottom to top.

Step S206, determining the target heuristic values of multiple instructions according to the scheduled instructions and the unscheduled instructions in the directed acyclic graph.

Step S208, scheduling the multiple instructions according to the target heuristic values.

Through the above steps S202 to S208, the problem in the related art that bidirectional scheduling is used for instruction scheduling before register allocation, and the heuristic relationship between the scheduled instructions and the unscheduled instructions with dependencies is unclear, resulting in poor scheduling effect, can be solved. The scheduled instructions and the unscheduled instructions with dependencies are connected through the directed acyclic graph, and the instruction scheduling is performed according to the heuristic values, thereby improving the scheduling effect.

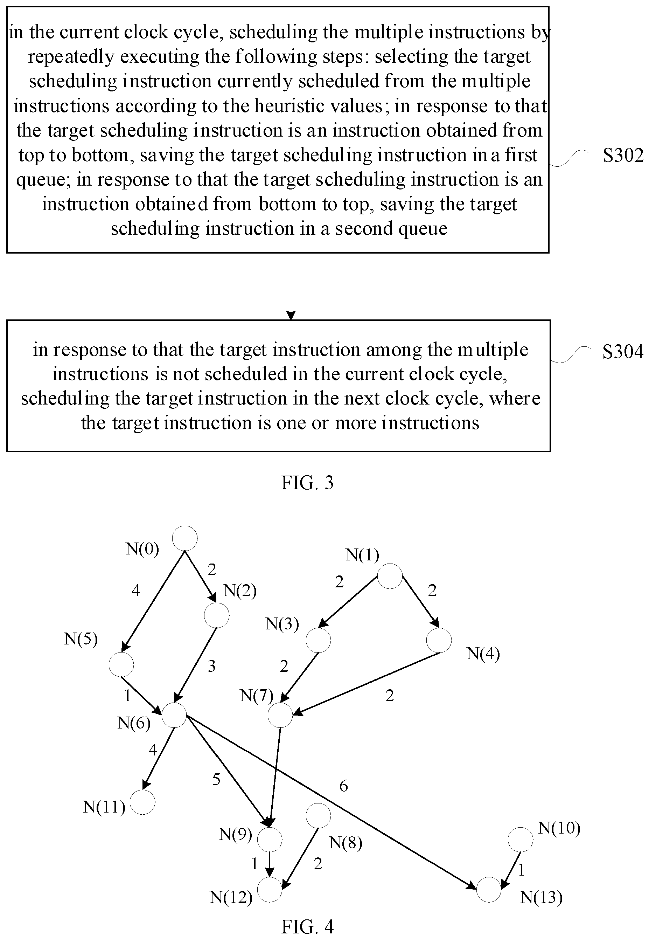

FIG. 3 is a flow chart of the instruction scheduling processing method according to an embodiment of the present application. As shown in FIG. 3, the above step S208 can include steps S302 and S304.

Step S302, in the current clock cycle, scheduling the multiple instructions by repeatedly executing the following steps: selecting the target scheduling instruction currently scheduled from the multiple instructions according to the heuristic values; in response to that the target scheduling instruction is an instruction obtained from top to bottom, saving the target scheduling instruction in a first queue; in response to that the target scheduling instruction is an instruction obtained from bottom to top, saving the target scheduling instruction in a second queue.

Step S304, in response to that the target instruction among the multiple instructions is not scheduled in the current clock cycle, scheduling the target instruction in the next clock cycle, where the target instruction is one or more instructions.

In an embodiment, in the above step S302, selecting the target scheduling instruction currently scheduled from multiple instructions according to the heuristic values can include steps S3021 and S3022.

At step S3021, when the heuristic value of the current instruction is equal to the heuristic value of the pre-selected instruction and the current instruction is a boundary instruction, if the current traversal is from top to bottom, the target scheduling instruction is determined according to the number of child nodes of the multiple instructions; if the current traversal is from bottom to top, the target scheduling instruction is determined according to the number of parent nodes of the multiple instructions.

At step S3022, when the heuristic value of the current instruction is equal to the heuristic value of the pre-selected instruction and the parent class instructions or child class instructions of the current instruction and the pre-selected instruction have been scheduled, if the unscheduled sequence is not empty, the instruction with the largest number of instructions in the unscheduled sequence is determined to be the target scheduling instruction; if the scheduled sequence is not empty, the instruction with the largest number of instructions in the scheduled sequence is determined to be the target scheduling instruction; if both the unscheduled sequence and the scheduled sequence are empty, the target scheduling instruction is determined based on the height or depth of multiple instructions.

Furthermore, the above step S3021 can include: when the current traversal is from top to bottom, if the instruction with the largest number of child nodes is one instruction, the instruction with the largest number of child nodes is determined to be the target scheduling instruction; if the instruction with the largest number of child nodes is at least two instructions, the index values of at least two instructions are compared to determine the instruction with the smallest index value as the target scheduling instruction; when the current traversal is from bottom to top, if the instruction with the largest number of parent nodes is one instruction, the instruction with the largest number of parent nodes is determined to be the target scheduling instruction; if the instruction with the largest number of parent nodes is at least two instructions, the index values of at least two instructions are compared to determine the instruction with the largest index value as the target scheduling instruction.

In an embodiment, if both the unscheduled sequence and the scheduled sequence in the above step S3022 are empty, determining the target scheduling instruction according to the height or depth of multiple instructions can include: when the current traversal is from top to bottom, if the instruction with the largest height is one instruction, determining the instruction with the largest height as the target scheduling instruction; if the instruction with the largest height is at least two instructions, determining the instruction with the smaller depth among the at least two instructions as the target scheduling instruction; when the traversal is from bottom to top, if the instruction with the largest depth is one instruction, determining the instruction with the largest depth as the target scheduling instruction; if the instruction with the largest depth is at least two instructions, determining the instruction with the smallest height among the at least two instructions as the target scheduling instruction.

In this embodiment, the above step S206 can include steps S2061 to S2066.

At step S2061, the overlap point of the current instruction in the critical path of the currently scheduled instruction is determined, and further, the child node of the node where the current instruction is located is used as the critical node of the scheduled instruction; the child node of the node where the scheduled instruction is located is determined; the node with the maximum height or maximum depth of the intersection nodes between the child nodes of the node where the scheduled instruction is located and the key nodes is determined as the overlap point of the current instruction in the critical path of the currently scheduled instruction, where the current instruction is each instruction in the multiple instructions.

At step S2062, a difference between the height of the current instruction and the overlap point is determined as a first heuristic value, or the difference between the depth of the current instruction and the overlap point is determined as the first heuristic value.

At step S2063, the longest path of the basic block is obtained, and the difference between the longest path and the first heuristic value is determined as a second heuristic value.

At step S2064, a proportion of the number of scheduled parent class instructions or child class instructions of the current instruction to all parent class instructions and child class instructions of the current instruction is determined as the first weight coefficient, and the proportion of the number of unscheduled parent class instructions or child class instructions to all parent class instructions and child class instructions of the current instruction is determined as the second weight coefficient.

At step S2065, the proportion of the height and depth of the scheduled parent class instructions or child class instructions of the current instruction to the longest path is determined as the third weight coefficient, and the proportion of the height and depth of the unscheduled parent class instructions or child class instructions of the current instruction to the longest path is determined as the fourth weight coefficient.

At step S2066, the first heuristic value and the second heuristic value are adjusted according to the first weight coefficient, the second weight coefficient, the third weight coefficient, and the fourth weight coefficient to obtain the target heuristic value of the current instruction. Further, if the current traversal is from top to bottom, the first heuristic value and the second heuristic value are adjusted according to the first weight coefficient, the second weight coefficient, the third weight coefficient, and the fourth weight coefficient to obtain the target heuristic value of the current instruction; if the current traversal is from top to bottom, the first heuristic value and the second heuristic value are adjusted according to the first weight coefficient, the second weight coefficient, the third weight coefficient, and the fourth weight coefficient to obtain the target heuristic value of the current instruction.

Specifically, the target heuristic value H' can be adjusted in the following ways:

$$H - \text{HitLevel} + (\text{MaxHeight} - H - \text{HitLevel1}) \times \frac{\text{NIS}}{\text{NIS} + \text{IS}} \times \frac{\text{NHCnt} + \text{NDCnt}}{\text{MaxLevel}}$$

$$+ \frac{-\text{IDCnt} - \text{IHCnt}}{\text{MaxLevel}} \times \frac{\text{IS}}{\text{NIS} + \text{IS}} \times (\text{MaxLevel} - H - \text{HitLevel})$$

Specifically, the target heuristic value D' can be adjusted in the following ways:

$$D - \text{HitLevel} + (\text{MaxDepth} - D - \text{HitLevel2}) \times \frac{\text{NIS}}{\text{NIS}+\text{IS}} \times \frac{\text{NHCnt}+\text{NDCnt}}{\text{MaxLevel}} + \frac{-\text{IDCnt}-\text{IHCnt}}{\text{MaxLevel}} \times \frac{\text{IS}}{\text{NIS}+\text{IS}} \times$$

$$(\text{MaxLevel} - D - \text{HitLevel});$$

where $\frac{\text{NIS}}{\text{NIS}+\text{IS}}$ is the first weight coefficient, $\frac{\text{NHCnt}+\text{NDCnt}}{\text{MaxLevel}}$ is the second weight coefficient, $\frac{-\text{IDCnt}-\text{IHCnt}}{\text{MaxLevel}}$ is the third weight coefficient, $\frac{\text{IS}}{\text{NIS}+\text{IS}}$ is the fourth weight coefficient, MaxHeight is the maximum height, HitLevel1 is the height of the overlap point, MaxDepth is the maximum depth, HitLevel2 is the depth of the overlap point, D is the depth of the current instruction, and H is the height of the current instruction.

NIS/(NIS+IS) refers to the ratio of the sum of the number of all parent nodes or child nodes of the current instruction that are not in the critical path to the sum of the number of all parent nodes or child nodes of the current instruction.

(NHCnt+NDCnt)/MaxLevel refers to the ratio of the sum of the height and depth of all parent nodes or child nodes of the current instruction that are not in the critical path to the longest path of the basic block.

(IDCnt+IHCnt)/MaxLevel refers to the ratio of the sum of the height and depth of all parent nodes or child nodes of the current instruction in the critical path to the longest path of the basic block.

IS/(NIS+IS) refers to the ratio of the sum of the number of all parent nodes or child nodes of the current instruction in the critical path to the sum of the number of all parent nodes or child nodes of the current instruction.

In an embodiment, the instruction scheduling processing method also includes: adjusting the scheduled instructions of the basic block in one of the following ways: adjusting the target storage instructions in the storage instructions of the basic block that have a larger distance from the parent class instructions; adjusting the target load instructions in the load instructions of the basic block that have a larger distance from the parent class instructions and the child class instructions; adjusting the distance between the parentless class instructions and their child class instructions; adjusting the gaps between instructions due to weights; and adjusting the position of the storage instructions in the basic block.

The instruction scheduling processing method saves the scheduled instructions in the bidirectional scheduling Top and Bot, connects the scheduled instructions and unscheduled instructions with dependencies through the invented heuristic value calculation function, and selects the appropriate instructions for scheduling through an improved method for selecting scheduling instructions based on heuristics values and other information.

After the basic block scheduling is completed, the instructions that have been scheduled in the bidirectional scheduling Top and Bot are merged according to the proposed merging method, and the minimum primitive Packet in the basic block is fine-tuned according to the proposed fine-tuning principles and the characteristics of special instructions. Without affecting the functional correctness of the basic block, the register pressure of the current basic block, the characteristics of the processor and the influence of dependent instructions in the entire basic block are comprehensively considered, so that the number of minimum primitives in the basic block is infinitely close to the longest path of the current basic block, and the processor spends fewer clock cycles to execute more instructions, thereby improving the computing performance of the processor.

The instruction scheduling processing method can be applied to the performance optimization of the compiler of the multi-issue processor. By scheduling instructions, the number of concurrent instructions executed in each clock cycle of the multi-issue processor reaches the number of concurrent units of the processor. The compiler of the multi-issue processor generates a binary file executable by the hardware after a series of optimizations of the input application code. Through the instruction scheduling of the present application, each unit of the multi-issue processor is fully loaded, to complete the same operation in fewer clock cycles.

Instruction scheduling is to modify the arrangement of instructions according to certain rules without changing the correctness, and give full play to the parallel characteristics of multi-issue processors according to the characteristics of multi-issue processors, so that the parallelism of multi-issue processors reaches the peak, to complete more instruction tasks in fewer clock cycles.

During instruction scheduling, the instructions to be scheduled are organized into a directed acyclic graph (DAG) according to the dependency relationship. The DAG consists of several nodes. The connection between two nodes is called an edge. No closed loop can be formed between any nodes in the DAG.

FIG. 4 is a schematic diagram of the directed acyclic graph according to an embodiment of the present application.

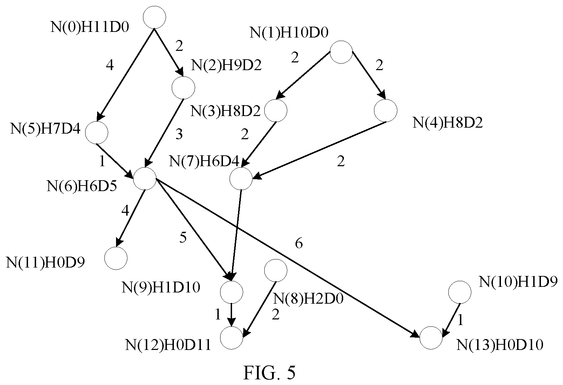

As shown in FIG. 4, the DAG is composed of 13 nodes, which are respectively N(0)~N(13), and the number between two nodes is the clock cycle that the node needs to wait. The height $H_i = \max(D(N(i), N(j)))$ of the DAG from bottom to top and the depth $D_i = \max(D(N(i), N(j)))$ of the DAG from top to bottom in FIG. 4 are calculated. FIG. 5 is a schematic diagram of the height and depth of the directed acyclic graph according to an embodiment of the present application.

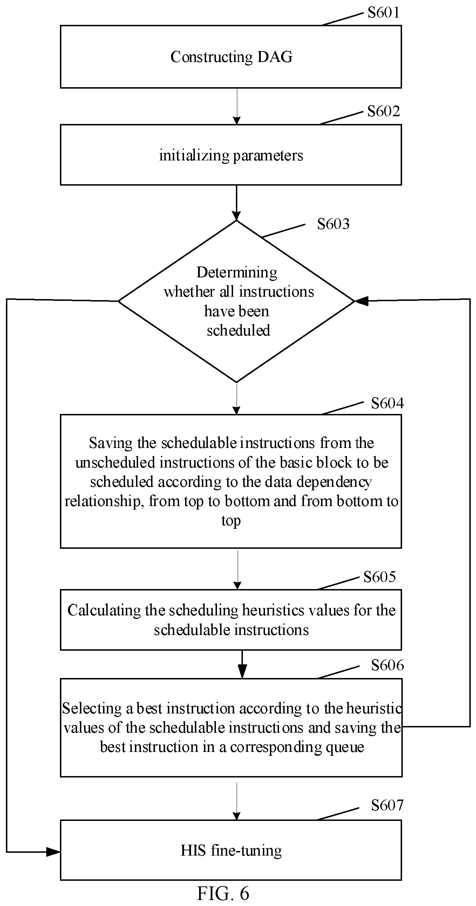

FIG. 6 is a flowchart of IHL scheduling according to an embodiment of the present application. As shown in FIG. 6, the instruction scheduling in this embodiment includes steps S601 to S607.

Step S601, constructing DAG: creating DAG according to the data dependency between instructions in the basic block.

Step S602, initializing parameters: initializing the parameters and variables required by the scheduling subsystem.

Step S603, determining whether all instructions have been scheduled, in response to that the determination result is yes, proceeding to step S607; and in response to that the determination result is no, proceeding to step S604.

Step S604, saving, via the schedulable instruction acquisition subsystem, the schedulable instructions from the unscheduled instructions of the basic block to be scheduled according to the data dependency relationship, from top to bottom and from bottom to top.

Step S605, calculating, via the heuristic value calculation subsystem, the scheduling heuristics values for the schedulable instructions.

Step S606, selecting, via the instruction selection subsystem, a best instruction according to the heuristic values of the schedulable instructions and saving the best instruction in a corresponding queue. The top-down schedulable instructions are saved in Top, and the bottom-up schedulable instructions are saved in Bot.

Step S607, performing, via the IHS fine-tuning subsystem, IHS fine-tuning.

By saving all the instructions that have been scheduled in Top and Bot, the heuristic values of the scheduled instructions is modified. After scheduling the basic block, the current basic block is appropriately transformed according to the characteristics of the target machine. It adopts a heuristic semi-global scheduling that mixes multiple strategies, which can also be called Improved Heuristic Scheduler (IHS) algorithm. The semi-global here specifically refers to the basic block currently scheduled.

The IHS fine-tuning subsystem is added to the overall scheduling process, and a new calculation formula is added. IHS completes the scheduling by adding a schedulable instruction acquisition subsystem, an IHS fine-tuning subsystem, and expanding the functions of the heuristic value calculation subsystem and the instruction selection subsystem.

The heuristic value calculation subsystem is the core of the IHS heuristic value calculation subsystem and the core of semi-global scheduling. HitLevel refers to the maximum depth (Bot) or height (Top) in the critical path overlap point instruction set of the successor dependent instruction or predecessor dependent instruction of the current instruction and the scheduled instruction.

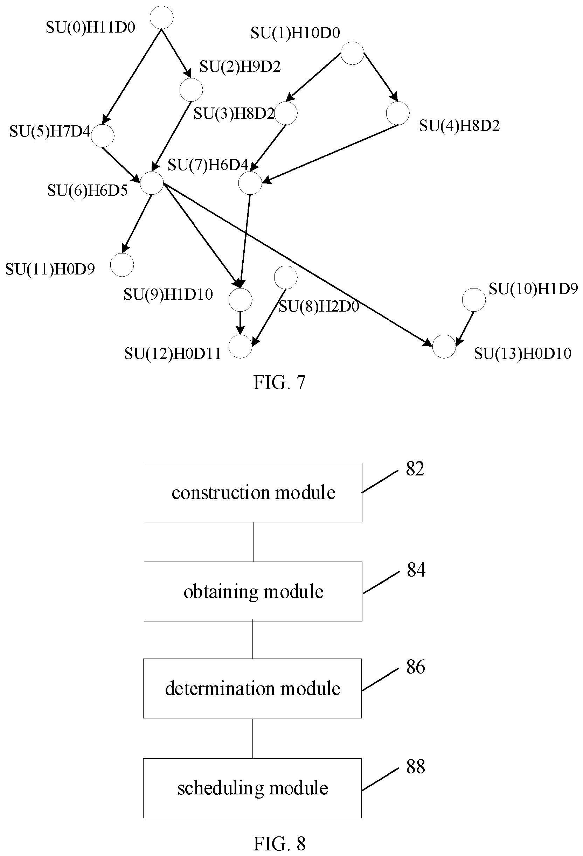

FIG. 7 is another schematic diagram of the directed acyclic graph according to an embodiment of the present application. As shown in FIG. 7, according to the Top-Down (from top to down) scheduling, instructions SU(0) and SU(1) are ready, and according to the Bot-UP (from bottom to up) scheduling, instructions SU(11), SU(12), and SU(13) are ready. The heuristic value calculation subsystem calculates a Cost for the above-mentioned ready SU, and determines whether to schedule the nodes in Top-Down or Bot-Up according to certain conditions. HitLevel is calculated in Bot-Up according to the depth of SU, and in Top-Down according to the height of SU.

Taking Top-Down as an example, assuming that only SU(0) is scheduled now, and the child nodes 2, 5, 6, 9, 11, 12, and 13 of SU(0) are used as the key nodes of the scheduled instructions. Currently, only SU(1) is ready in the Top-Down Schedule, and the HitLevel of SU(1) needs to be calculated. By traversing the child class nodes of SU(1), it is found that SU(9) is both the child node of the current node and the key node. Therefore, the Height of SU(9) is the HitLevel of SU(1). The specific situation may be much more complicated than this. There may be multiple SUs that are both child nodes and key nodes. In this case, the largest Height can be used for Top-Down.

Taking Bot-Up as an example, assuming that only SU(12) is scheduled now, and the parent class nodes 9, 8, 7, 6, 5, 4, 3, 2, 1 and 0 of SU(12) are used as key nodes. Currently, SU(13) and SU(11) are ready in Bot-Up to find SU that uses SU(13) and SU(11) as the child nodes and is the key node. As can be seen from the figure, SU(6) is both the parent class node and the key node. Therefore, the depth of SU(6) is their common HitLevel.

Based on the original heuristic value calculation subsystem, combined with HitLevel, a new calculation formula is added to the heuristic value calculation subsystem.

For Top-Down SU, the calculation formula is as follows:

$$
\mathrm{H} - \mathrm{HitLevel} + (\mathrm{MaxLevel} - \mathrm{H} - \mathrm{HitLevel}) \times \frac{\mathrm{NIS}}{\mathrm{NIS+IS}} \times \frac{\mathrm{NHCnt+NDCnt}}{\mathrm{MaxLevel}} +
$$

$$
\frac{-\mathrm{IDCnt-IHCnt}}{\mathrm{MaxLevel}} \times \frac{\mathrm{IS}}{\mathrm{NIS+IS}} \times (\mathrm{MaxLevel} - \mathrm{H} - \mathrm{HitLevel}).
$$

For Bot-Up SU, the calculation formula is as follows:

$$
\mathrm{D} - \mathrm{HitLevel} + (\mathrm{MaxLevel} - \mathrm{D} - \mathrm{HitLevel}) \times \frac{\mathrm{NIS}}{\mathrm{NIS+IS}} \times \frac{\mathrm{NHCnt+NDCnt}}{\mathrm{MaxLevel}} +
$$

$$
\frac{-\mathrm{IDCnt-IHCnt}}{\mathrm{MaxLevel}} \times \frac{\mathrm{IS}}{\mathrm{NIS+IS}} \times (\mathrm{MaxLevel} - \mathrm{D} - \mathrm{HitLevel}).
$$

The above formula is to adjust the heuristic value comprehensively based on the height or depth of the current SU and the distance from the key node, as well as the weight of its parent node or child node in the critical path. Considering the overall impact on the heuristic value, the range of the heuristic value is controlled between -MaxLevel and MaxLevel.

The calculation process of the heuristic value includes:

(1) obtaining the overlap point of the current scheduling instruction in the critical path of the currently scheduled instruction as HitLevel;

(2) obtaining the difference between the height or (depth) of the current scheduling instruction and HitLevel as the first heuristic value;

(3) obtaining the longest path of the current basic block as MaxLevel;

(4) obtaining the difference between MaxLevel and the first heuristic value as the second heuristic value;

(5) obtaining the proportion of the number of scheduled parent or child class instructions of the current scheduling instruction to all parent classes and child classes of the current instruction, as the first weight coefficient; the proportion of the number of unscheduled parent or child class instructions to all parent classes and child classes of the current instruction, as the second weight coefficient;

(6) obtaining the proportion of the height sum and depth sum of the scheduled parent or child class instructions of the current scheduling instruction to MaxLevel, as the third weight coefficient; and obtaining the proportion of the height sum and depth sum of the unscheduled parent or child class instructions of the current scheduling instruction to MaxLevel, as the fourth weight coefficient;

(7) the final heuristic value is a value obtained by comprehensively adjusting the first heuristic value and the second heuristic value according to the first weight coefficient, the second weight coefficient, the third weight coefficient and the fourth weight coefficient.

The instruction selection subsystem selects the optimal instruction scheduling by comparing the heuristic values of all schedulable instructions. The selection criteria are as follows: if the heuristic value of the current instruction is equal to the heuristic value of the pre-selected instruction and the current instruction is a boundary instruction; the current traversal is Top, and the instruction with more child nodes is saved; if the number of child nodes of the two is the same, the index values of the two are compared, and the instruction with the smaller index value is saved. The current traversal is Bot, and the instruction with more parent nodes is saved. If the number of parent nodes of the two is the same, the index values of the two are compared, and the instruction with the larger index value is saved. When the heuristic value of the current instruction is equal to the heuristic value of the pre-selected instruction and the parent or child class instructions of the current and pre-selected instructions have been scheduled, if the unscheduled sequence is not empty, the instructions with more instructions in the unscheduled sequence are saved; if the scheduled sequence is not empty, the instructions with more instructions in the scheduled sequence are saved. When both the unscheduled sequence and scheduled sequence are empty, if the traversal is Top, the instructions with larger height are saved; if the heights are equal, the instructions with smaller depth are saved. When the depths are equal, the instructions with smaller index values are saved. If the traversal is Bot, the instructions with larger depth are saved; if the depths are equal, the instructions with smaller height are saved; if the heights are equal, the instructions with larger index values are saved.

The IHS fine-tuning subsystem adjusts the instructions in the scheduled basic blocks to reduce the register pressure between instructions. The fine-tuning criteria include: adjusting the Store instructions with a large distance between Store and its parent class instruction; adjusting the Load instructions with a large distance between Load and its parent class instruction and child class instruction; adjusting the distance between the parentless class instruction and its child class instruction; adjusting the stall caused by weight between instructions; adjusting the position of the Store in the basic package, and moving the Store to the front of the basic package and the position where it can be placed.

The IHS fine-tuning subsystem mainly includes the pre-packaging module, the Store instruction adjustment module, the Load instruction adjustment module, the general instruction adjustment module, and the Store post-adjustment module.

The pre-packaging module is configured to pack the scheduled basic blocks in sequence according to resources and related restrictions to complete the pre-packaging of the entire basic block.

The Store instruction adjustment module is configured to release registers by reducing the life interval of registers occupied by Store, including: traversing all Stores and finding max_index = max(Pred$_i$. index + Latency$_i$) , Distance = Store. index - max_index in the Preds (parent class) of the Store instruction. If the Distance is greater than zero, the corresponding Store instruction is saved; all Stores with equal Distance are sorted according to the index value; and the positions of the Stores in the pre-packaging are moved according to the Distance from large to small.

The Load instruction adjustment module is configured to release registers by reducing the life span of registers occupied by Load. The steps include: traversing all Loads, finding min_index = min(Succ$_i$.index - Latency$_i$) and max_index = max(Pred$_j$.index + Latency$_j$) in the Succs (child class) of the Load instruction. If min_index is greater than zero and max_index is less than zero, Distance = min_index - LD. index,. If min_index is less than zero and max_index is greater than zero, Distance = max(max_index, has_anti? PIndex.max: (PIndex. max - Cnt)) - LD. index. If min_index is greater than zero and max_index is greater than zero, Distance = min_index - max(LD.index, max_index).

All Loads with equal Distance are sorted according to index values, and the positions of Loads in pre-packaging are moved according to Distance from large to small.

The general instruction adjustment module is configured to adjust the parentless class instructions (MOVI, CONST, etc.) so that they do not occupy extra valid intervals in pre-packaging, and is configured to increase PS_DelayLSU_I to solve the problem of introducing more stalls (i.e., nops) due to the LD-ST-SPU sharing the same register.

The present application also provides an instruction scheduling processing apparatus. FIG. 8 is a block diagram of the instruction scheduling processing apparatus according to an embodiment of the present application. As shown in FIG. 8, the instruction scheduling processing apparatus includes a construction module 81, an obtaining module 84, a determination module 86, and a scheduling module 88.

The construction module 82 is configured to construct the directed acyclic graph according to the data dependency relationship of the instructions to be scheduled of the basic block to be scheduled. The directed acyclic graph is composed of multiple nodes, each node corresponds to an instruction to be scheduled, and the connection between the nodes is the clock cycle that the node needs to wait.

The obtaining module 84 is configured to obtain multiple instructions currently scheduled from top to bottom and from bottom to top.

The determination module 86 is configured to determine the target heuristic values of multiple instructions according to the scheduled instructions and the unscheduled instructions in the directed acyclic graph.

The scheduling module 88 is configured to schedule multiple instructions according to the target heuristic values.

In an embodiment, the scheduling module 88 includes: a repeated scheduling sub-module and a scheduling sub-module. The repeated scheduling sub-module is configured to schedule multiple instructions in the current clock cycle by repeatedly executing the following steps: selecting the target scheduling instruction currently scheduled from multiple instructions according to the heuristic values; in response to that the target scheduling instruction is an instruction obtained from top to bottom, saving the target scheduling instruction in the first queue; in response to that the target scheduling instruction is an instruction obtained from bottom to top, saving the target scheduling instruction in the second queue. The scheduling sub-module is configured to schedule the target instruction in the next clock cycle if the target instruction among multiple instructions in the current clock cycle is not scheduled. The target instruction is one or more instructions.

In an embodiment, the repeated scheduling sub-module includes a first determination unit and a second determination unit. The first determination unit is configured to determine the target scheduling instruction according to the number of child nodes of multiple instructions if the current traversal is from top to bottom when the heuristic value of the current instruction is equal to the heuristic value of the pre-selected instruction and the current instruction is a boundary instruction; if the current traversal is from bottom to top, the target scheduling instruction is determined according to the number of parent nodes of the multiple instructions. The second determination unit is configured to determine the instruction with the largest number of instructions in the unscheduled sequence as the target scheduling instruction if the unscheduled sequence is not empty when the heuristic value of the current instruction is equal to the heuristic value of the pre-selected instruction and the parent class instructions or child class instructions of the current instruction and the pre-selected instruction have been scheduled; if the scheduled sequence is not empty, the instruction with the largest number of instructions in the scheduled sequence is determined as the target scheduling instruction; if both the unscheduled sequence and the scheduled sequence are empty, the target scheduling instruction is determined according to the height or depth of multiple instructions.

In an embodiment, the first determination unit is also configured to perform the following operations: when the current traversal is from top to bottom, if the instruction with the largest number of child nodes is one instruction, determine the instruction with the largest number of child nodes as the target scheduling instruction; if the instruction with the largest number of child nodes is at least two instructions, compare the index values of at least two instructions to determine the instruction with the smallest index value as the target scheduling instruction; when the current traversal is from bottom to top, if the instruction with the largest number of parent nodes is one instruction, determine the instruction with the largest number of parent nodes as the target scheduling instruction; if the instruction with the largest number of parent nodes is at least two instructions, compare the index values of at least two instructions to determine the instruction with the largest index value as the target scheduling instruction.

In an embodiment, the second determination unit is also configured to perform the following operations: when the current traversal is from top to bottom, if the instruction with the largest height is one instruction, determine the instruction with the largest height as the target scheduling instruction; if the instruction with the largest height is at least two instructions, determine the instruction with the smaller depth among the at least two instructions as the target scheduling instruction; when the traversal is from bottom to top, if the instruction with the largest depth is one instruction, determine the instruction with the largest depth as the target scheduling instruction; if the instruction with the largest depth is at least two instructions, determine the instruction with the smallest height among the at least two instructions as the target scheduling instruction.

In an embodiment, the determination module includes a first determination sub-module, a second determination sub-module, a third determination sub-module and a fourth determination sub-module. The first determination sub-module is configured to determine the overlap point of the current instruction in the critical path of the currently scheduled instruction. The current instruction is each instruction in the multiple instructions. The second determination sub-module is configured to determine the difference between the height of the current instruction and the overlap point as the first heuristic value, or to determine the difference between the depth of the current instruction and the overlap point as the first heuristic value. The third determination submodule is configured to obtain the longest path of the basic block, determine the difference between the longest path and the first heuristic value as the second heuristic value. The fourth determination submodule is configured to determine the proportion of the number of scheduled parent class instructions or child class instructions of the current instruction to all parent class instructions and child class instructions of the current instruction as the first weight coefficient, and to determine the proportion of the number of unscheduled parent class instructions or child class instructions to all parent class instructions and child class instructions of the current instruction as the second weight coefficient. The fifth determination submodule is configured to determine the proportion of the height sum and depth sum of the scheduled parent class instructions or child class instructions of the current instruction to the longest path as the third weight coefficient, and to determine the proportion of the height sum and depth sum of the unscheduled parent class instructions or child class instructions of the current instruction to the longest path as a fourth weight coefficient. The adjustment submodule is configured to adjust the first heuristic value and the second heuristic value according to the first weight coefficient, the second weight coefficient, the third weight coefficient and the fourth weight coefficient to obtain a target heuristic value for the current instruction.

In an embodiment, the first determination submodule is also configured to use the child node of the node where the current instruction is located as the key node of the scheduled instruction, determine the child nodes of the node where the scheduled instruction is located, and determine the node with the maximum height or maximum depth of the intersection node between the child node of the node where the scheduled instruction is located and the key node as the overlap point of the current instruction in the critical path of the current scheduled instruction.

In an embodiment, the adjustment submodule is also configured to, if the current traversal is from top to bottom, adjust the first heuristic value and the second heuristic value according to the first weight coefficient, the second weight coefficient, the third weight coefficient, and the fourth weight coefficient to obtain the target heuristic value of the current instruction; if the current traversal is from top to bottom, adjust the first heuristic value and the second heuristic value according to the first weight coefficient, the second weight coefficient, the third weight coefficient, and the fourth weight coefficient to obtain the target heuristic value of the current instruction.

In an embodiment, the instruction scheduling processing apparatus further includes an adjustment module. The adjustment module is configured to adjust the instructions of the scheduled basic block in one of the following ways: adjusting the target storage instructions with a larger distance from the parent class instructions in the storage instructions of the basic block; adjusting the target load instructions with a larger distance from the parent class instructions and the child class instructions in the load instructions of the basic block; adjusting the distance between the parentless class instructions and their child class instructions; adjusting the gaps between the instructions due to weights; and adjusting the positions of the storage instructions in the basic package.

The present application also provides a computer-readable storage medium, on which a computer program is stored, and the computer program is configured to execute the above-mentioned instruction scheduling processing method when running.

In an exemplary embodiment, the computer-readable storage medium may include, but is not limited to, various media that can store computer programs, such as a USB flash drive, a read-only memory (ROM), a random access memory (RAM), a mobile hard disk, a magnetic disk, or an optical disk.

The present application also provides an electronic device, including a memory and a processor, a computer program is stored in the memory, and the processor is configured to execute the computer program to perform the above-mentioned instruction scheduling processing method.

In an exemplary embodiment, the electronic device can further include a transmission device and an input/output device, the transmission device is connected to the processor, and the input/output device is connected to the processor.

The specific examples in this embodiment can refer to the examples described in the above embodiments and exemplary implementations, and will not be repeated here.

Obviously, those skilled in the art should understand that the above modules or steps of the present application can be implemented by a general computing device, they can be concentrated on a single computing device, or distributed on a network composed of multiple computing devices, they can be implemented by a program code executable by a computing device, so that they can be stored in a storage device and executed by the computing device. In some cases, the steps shown or described can be executed in a different order from that herein, or they can be made into individual integrated circuit modules, or multiple modules or steps therein can be made into a single integrated circuit module for implementation. Thus, the present application is not limited to any specific combination of hardware and software.

The above description are only embodiments of the present application and are not intended to limit the present application. For those skilled in the art, the present application can have various modifications and variations. Any modification, equivalent replacement, improvement, etc. made within the principles of the present application shall be included in the scope of the present application.

**Claims**

1. An instruction scheduling processing method, **characterized by** comprising:

    constructing a directed acyclic graph according to data dependency relationships for instructions to be scheduled of a basic block to be currently scheduled, wherein the directed acyclic graph comprises multiple nodes, each of the multiple nodes corresponds to an instruction to be scheduled, and a connection between the multiple nodes is a clock cycle that the node needs to wait for;
    obtaining multiple instructions currently scheduled from top to bottom and from bottom to top;
    determining target heuristic values of the multiple instructions according to scheduled instructions and unscheduled instructions in the directed acyclic graph respectively; and
    scheduling the multiple instructions according to the target heuristic values.

2. The method of claim 1, wherein the scheduling the multiple instructions according to the target heuristic values comprises:

    in a current clock cycle, scheduling the multiple instructions by repeatedly executing the following steps: selecting a target scheduling instruction currently scheduled from the multiple instructions according to the target heuristic values; in response to that the target scheduling instruction is an instruction obtained from top to bottom, saving the target scheduling instruction in a first queue; in response to that the target scheduling instruction is an instruction obtained from bottom to top, saving the target scheduling instruction in a second queue; and

in response to that a target instruction among the multiple instructions is not scheduled in the current clock cycle, scheduling the target instruction in a next clock cycle, wherein the target instruction is one or more instructions.

3. The method of claim 2, wherein the selecting the target scheduling instruction for current scheduling from the multiple instructions according to the target heuristic values comprises:

in response to that a heuristic value of a current instruction is equal to a heuristic value of a pre-selected instruction and the current instruction is a boundary instruction, if current traversal is from top to down, determining the target scheduling instruction according to number of child nodes of the multiple instructions; if the current traversal is from bottom to up, determining the target scheduling instruction according to number of parent nodes of the multiple instructions; and

in response to that the heuristic value of the current instruction is equal to the heuristic value of the pre-selected instruction and parent class instructions or child class instructions of the current instruction and the pre-selected instruction are scheduled, if a unscheduled sequence is not empty, determining an instruction with largest number of instructions in the unscheduled sequence to be the target scheduling instruction; if the scheduled sequence is not empty, determining an instruction with largest number of instructions in the scheduled sequence to be the target scheduling instruction; if the unscheduled sequence and the scheduled sequence are both empty, determining the target scheduling instruction according to heights or depths of the multiple instructions.

4. The method of claim 3, wherein in response to that the current traversal is from top to bottom, determining the target scheduling instruction according to the number of nodes of the multiple instructions; in response to that the current traversal is from bottom to top, determining the target scheduling instruction according to the number of parent nodes of the multiple instructions, comprises:

in response to that the current traversal is from top to bottom, if an instruction with largest number of child nodes is one instruction, determining the instruction with the largest number of child nodes as the target scheduling instruction; if an instruction with largest number of child nodes is at least two instructions, comparing index values of the at least two instructions to determine an instruction with a smallest index value as the target scheduling instruction; and

in response to that the current traversal is from bottom to top, if an instruction with largest number of parent nodes is one instruction, determining an instruction with the largest number of parent nodes to be the target scheduling instruction; if the instruction with the largest number of parent nodes are at least two instructions, comparing index values of the at least two instructions to determine the instruction with the largest index value to be the target scheduling instruction.

5. The method of claim 3, wherein in response to that both the unscheduled sequence and the scheduled sequence are empty, determining the target scheduling instruction according to the height or depth of the multiple instructions, comprises:

in response to that the current traversal is from top to bottom, if an instruction with largest height is one instruction, determining the instruction with the largest height as the target scheduling instruction; if the instruction with the largest height is at least two instructions, determining an instruction with a smaller depth among the at least two instructions as the target scheduling instruction; and

in response to that the current traversal is bottom-up, if an instruction with a largest depth is one instruction, determining the instruction with the largest depth as the target scheduling instruction; if the instruction with the largest depth is at least two instructions, determining an instruction with a smallest height among the at least two instructions as the target scheduling instruction.

6. The method of claim 1, wherein determining the target heuristic values of the multiple instructions according to the scheduled instructions and the unscheduled instructions in the directed acyclic graph respectively comprises:

determining an overlap point of a current instruction in a critical path of current scheduled instructions, wherein the current instruction is each instruction in the multiple instructions;

determining a difference between a height of the current instruction and the overlap point as a first heuristic value, or determining a difference between a depth of the current instruction and the overlap point as a first heuristic value;
obtaining a longest path of the basic block;
determining a difference between the longest path and the first heuristic value as a second heuristic value;
determining a proportion of number of scheduled parent class instructions or scheduled child class instructions of the current instruction to all parent class instructions and child class instructions of the current instruction as a first weight coefficient, and determine a proportion of number of unscheduled parent class instructions or unscheduled child class instructions to all parent class instructions and child class instructions of the current instruction as a second weight coefficient;
determining a proportion of a height sum and a depth sum of the scheduled parent class instructions or the scheduled child class instructions of the current instruction to the longest path as a third weight coefficient, and determining a proportion of a height and a depth of the unscheduled parent class instructions or unscheduled child class instructions of the current instruction to the longest path as a fourth weight coefficient; and
adjusting the first heuristic value and the second heuristic value according to the first weight coefficient, the second weight coefficient, the third weight coefficient, and the fourth weight coefficient to obtain a target heuristic value for the current instruction.

7. The method of claim 6, wherein determining the overlap point of the current instruction in the critical path of the currently scheduled instruction comprises:

configuring a child node of a node where the current instruction is located as a key node of the scheduled instruction;
determining a child node of a node where the scheduled instruction is located; and
determining a node with a maximum height or a maximum depth of an intersection node between the child node of the node where the scheduled instruction is located and the key node as the overlap point of the current instruction in the critical path of the currently scheduled instruction.

8. The method of claim 7, wherein the adjusting the first heuristic value and the second heuristic value according to the first weight coefficient, the second weight coefficient, the third weight coefficient, and the fourth weight coefficient to obtain the target heuristic value for the current instruction comprises:

in response to that current traversal is from top to bottom, adjusting the first heuristic value and the second heuristic value according to the first weight coefficient, the second weight coefficient, the third weight coefficient and the fourth weight coefficient to obtain the target heuristic value of the current instruction; and
in response to that the current traversal is from top to bottom, adjusting the first heuristic value and the second heuristic value according to the first weight coefficient, the second weight coefficient, the third weight coefficient, and the fourth weight coefficient to obtain the target heuristic value of the current instruction.

9. The method of claim 1, further comprising:
adjusting instructions of a scheduled basic block in one of the following ways:

adjusting target storage instructions with a larger distance from parent class instructions in storage instructions of the basic block;
adjusting target load instructions with a larger distance from parent class instructions and child class instructions in load instructions of the basic block;
adjusting a distance between parentless class instructions and child class instructions of the parentless class instructions;
adjusting gaps between instructions due to weights; and
adjusting a position of storage instructions in a basic package.

10. An instruction scheduling processing apparatus, **characterized by** comprising:

a construction module configured to construct a directed acyclic graph according to data dependencies of instructions to be scheduled of a basic block to be currently scheduled, wherein the directed acyclic graph is composed of multiple nodes, each of the multiple nodes corresponds to an instruction to be scheduled, and a connection between the multiple nodes is a clock cycle that the node needs to wait for;
an obtaining module configured to obtain multiple instructions currently scheduled from top to bottom and from bottom to top;
a determination module configured to determine target heuristic values of the multiple instructions according to scheduled instructions and unscheduled instructions in the directed acyclic graph respectively; and
a scheduling module configured to schedule the multiple instructions according to the target heuristic values.

11. A non-transitory computer-readable storage medium, **characterized in that** a computer program is stored in the non-transitory computer-readable storage medium, and when the computer program is executed, the instruction scheduling processing method of any one of claims 1 to 9 is implemented.

12. An electronic device, **characterized by** comprising a memory and a processor, wherein a computer program is stored in the memory, and the processor is configured to execute the computer program to perform the instruction scheduling processing method of any one of claims 1 to 9.

input/output device
**108**

transmission
device
**106**

processor **102**

memory
**104**

FIG. 1

| constructing the instructions to be scheduled of the basic block to be scheduled into a directed acyclic graph according to the data dependency relationship | S202 |

| obtaining multiple instructions currently scheduled from top to bottom and from bottom to top | S204 |

| determining the target heuristic values of multiple instructions according to the scheduled instructions and the unscheduled instructions in the directed acyclic graph | S206 |

| scheduling the multiple instructions according to the target heuristic values | S208 |

FIG. 2

in the current clock cycle, scheduling the multiple instructions by repeatedly executing the following steps: selecting the target scheduling instruction currently scheduled from the multiple instructions according to the heuristic values; in response to that the target scheduling instruction is an instruction obtained from top to bottom, saving the target scheduling instruction in a first queue; in response to that the target scheduling instruction is an instruction obtained from bottom to top, saving the target scheduling instruction in a second queue

S302

in response to that the target instruction among the multiple instructions is not scheduled in the current clock cycle, scheduling the target instruction in the next clock cycle, where the target instruction is one or more instructions

S304

FIG. 3

FIG. 4

FIG. 5

```
                                              ┌─ S601
        ┌──────────────────────────────────────┐
        │          Constructing DAG             │
        └──────────────────────────────────────┘
                          │
                          ▼                   ┌─ S602
        ┌──────────────────────────────────────┐
        │          initializing parameters      │
        └──────────────────────────────────────┘
                          │
                          ▼
```

Determining
whether all instructions
have been
scheduled          — S603

Saving the schedulable instructions from the
unscheduled instructions of the basic block to be
scheduled according to the data dependency
relationship, from top to bottom and from bottom to
top          — S604

Calculating the scheduling heuristics values for the
schedulable instructions          — S605

Selecting a best instruction according to the heuristic
values of the schedulable instructions and saving the
best instruction in a corresponding queue          — S606

HIS fine-tuning          — S607

FIG. 6

SU(0)H11D0

SU(1)H10D0

SU(2)H9D2

SU(3)H8D2

SU(4)H8D2

SU(5)H7D4

SU(7)H6D4

SU(6)H6D5

SU(11)H0D9

SU(10)H1D9

SU(9)H1D10

SU(8)H2D0

SU(12)H0D11

SU(13)H0D10

FIG. 7

construction module — 82

obtaining module — 84

determination module — 86

scheduling module — 88

FIG. 8

## INTERNATIONAL SEARCH REPORT

| International application No. |
|---|
| **PCT/CN2023/117970** |

### A. CLASSIFICATION OF SUBJECT MATTER

G06F 9/38(2018.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 指令, 有向无环图, 自顶而下, 自顶向下, 自底而上, 自底向上, 依赖, 启发量, instruction, DAG, top down, bottom up, dependency

### C. DOCUMENTS CONSIDERED TO BE RELEVANT

| Category* | Citation of document, with indication, where appropriate, of the relevant passages | Relevant to claim No. |
|---|---|---|
| A | CN 104699466 A (NATIONAL UNIVERSITY OF DEFENSE TECHNOLOGY OF PLA) 10 June 2015 (2015-06-10)<br>description, paragraphs 0003-0022 | 1-12 |
| A | CN 109918134 A (HUNAN UNIVERSITY OF SCIENCE AND TECHNOLOGY) 21 June 2019 (2019-06-21)<br>entire document | 1-12 |
| A | CN 110427259 A (BEIJING QIYI CENTURY SCIENCE & TECHNOLOGY CO., LTD.) 08 November 2019 (2019-11-08)<br>entire document | 1-12 |
| A | WO 2022199864 A1 (VERIMATRIX UK LTD.) 29 September 2022 (2022-09-29)<br>entire document | 1-12 |
| A | 胡浩 等 (HU, Hao et al.). "基于LLVM编译器的节点融合优化方法 (Node Fusion Optimization Method Based on LLVM Compiler)"<br>计算机科学 (Computer Science), No. S1, 15 June 2020 (2020-06-15), 561-566<br>entire document | 1-12 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 November 2023** | **28 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/117970**

| Patent document cited in search report | | | Publication date (day/month/year) | Patent family member(s) | Publication date (day/month/year) |
|---|---|---|---|---|---|
| CN | 104699466 | A | 10 June 2015 | None | |
| CN | 109918134 | A | 21 June 2019 | None | |
| CN | 110427259 | A | 08 November 2019 | None | |
| WO | 2022199864 | A1 | 29 September 2022 | None | |

Form PCT/ISA/210 (patent family annex) (July 2022)

**REFERENCES CITED IN THE DESCRIPTION**

**Patent documents cited in the description**

- CN 202211588891